# EUROPÄISCHE PATENTANMELDUNG

(11) **EP 2 468 618 A1**
(43) Veröffentlichungstag der Anmeldung: **27.06.2012**
(21) Anmeldenummer: 11000424.9
(22) Anmeldetag: 20.01.2011
(51) Int. Cl.: B62L 3/02, B62K 23/06, B62M 25/04

(54) **Betätigungsvorrichting für ein hydraulisches System**

(30) Priorität: 02.12.2010 DE 202010016054 U
(71) Anmelder: Brake Force One GmbH, 72074 Tübingen (DE)
(72) Erfinder: Lauhoff, Jakob, 72147 Nehren (DE)
(74) Vertreter: Kohler Schmid Möbus

(57) **Zusammenfassung**

Bei einer Betätigungsvorrichtung (1.1, 1.2, 1.3, 1.4) für ein hydraulisches System eines Zweirads, Trikes oder Quads, mit einem Betätigungselement (9.1, 9.2, 9.3), einem ein Arbeitsvolumen (5.1, 5.2, 5.3) aufweisenden Hydraulikzylinderteil (2.1, 2.2, 2.3, 2.4) und einem zumindest teilweise im Arbeitsvolumen (5.1, 5.2, 5.3) angeordneten Volumenverdrängungselement (3.1, 3.2, 3.3), wobei das Hydraulikzylinderteil (2.1, 2.2, 2.3, 2.4) und das Volumenverdrängungselement (3.1, 3.2, 3.3) relativ zueinander bewegbar sind, ist das Betätigungselement (9.1, 9.2, 9.3) um eine Achse parallel zur Längsachse des Hydraulikzylinderteils (2.1, 2.2, 2.3, 2.4) drehbar angeordnet und ist eine Übersetzungsanordnung vorgesehen, die eine Drehbewegung des Betätigungselements (9.1, 9.2, 9.3) in eine Axialbewegung des Hydraulikzylinderteils (2.1, 2.2, 2.3, 2.4) und/oder des Volumenverdrängungselements (3.1, 3.2, 3.3) wandelt.

## Beschreibung

Die Erfindung betrifft eine Betätigungsvorrichtung für ein hydraulisches System eines Zweirads, Trikes oder Quads, mit einem Betätigungselement, einem ein Arbeitsvolumen aufweisenden Hydraulikzylinderteil und einem zumindest teilweise im Arbeitsvolumen angeordneten Volumenverdrängungselement, wobei das Hydraulikzylinderteil und das Volumenverdrängungselement relativ zueinander bewegbar sind.

Bei Zweirädern, insbesondere bei Fahrrädern, Quads und Trikes kommen vermehrt hydraulische Bremsen zum Einsatz, die nicht mehr auf die Felge des Laufrades wirken, sondern auf eine Bremsscheibe am Laufrad. Die Betätigung derartiger hydraulischer Bremsen erfolgt in der Regel über einen Handgriff, der vom Lenker absteht. Außerdem weisen bekannte Bremsgriffe eine komplizierte und anfällige Kinematik auf, um aus der rotierenden Hebelbewegung eine lineare Kolbenbewegung zu erzeugen.

Darüber hinaus besteht insbesondere bei einem Sturz Verletzungsgefahr durch die abstehenden Bremsgriffe.

Aus der DE 44 00 641 A1 ist eine Betätigungsvorrichtung für eine Fahrradbremse bekannt, die im Lenkerrohr teilweise integriert ist und eine Betätigung der Bremse mittels Daumendruck erlaubt, wobei die Finger während des Bremsvorganges nicht vom Lenker entfernt zu werden brauchen. Die Betätigungsvorrichtung enthält einen Geberzylinder zur Erzeugung eines hydraulischen Druckes und kann in Kombination mit einem Dreh-Schaltgriff zur Betätigung von Gangschaltungen eingesetzt werden.

Die bekannte Betätigungsvorrichtung muss in das Lenkerrohr integriert werden und ist daher schlecht zugänglich. Außerdem bestehen geringe Variationsmöglichkeiten bezüglich der Anordnung der Betätigungsvorrichtung am Lenker, was ergonomisch unter Umständen unvorteilhaft sein kann.

Aufgabe der vorliegenden Erfindung ist es, eine Betätigungsvorrichtung für eine Bremse bereitzustellen, die geschlossen, kompakt und einfach aufgebaut ist und wenig störanfällig ist.

Gelöst wird diese Aufgabe erfindungsgemäß durch eine Betätigungsvorrichtung für ein hydraulisches System eines Zweirads, Trikes oder Quads, mit einem Betätigungselement, einem ein Arbeitsvolumen aufweisenden Hydraulikzylinderteil und einem zumindest teilweise im Arbeitsvolumen angeordneten Volumenverdrängungselement, wobei das Hydraulikzylinderteil und das Volumenverdrängungselement relativ zueinander bewegbar sind, wobei das Betätigungselement um eine Achse parallel zur Längsachse des Hydraulikzylinderteils drehbar angeordnet ist und eine Übersetzungsanordnung vorgesehen ist, die eine Drehbewegung des Betätigungselements in eine Axialbewegung des Hydraulikzylinderteils und/oder des Volumenverdrängungselements wandelt. Erfindungsgemäß wird Hydraulikflüssigkeit aus dem Arbeitsvolumen verdrängt, indem das Hydraulikzylinderteil auf das Volumenverdrängungselement zu bewegt wird, das Volumenverdrängungselement innerhalb des Arbeitsvolumens des Hydraulikzylinderteils verlagert wird oder beide Teile aufeinander zu bewegt werden. Die Betätigungsvorrichtung kann über eine Hydraulikleitung mit einem hydraulischen System, insbesondere einer Bremszange, verbindbar sein. Bei der erfindungsgemäßen Betätigungsvorrichtung handelt es sich vorteilhafterweise um eine Handoder Fingerbetätigungsvorrichtung, die es einem Benutzer erlaubt, ein hydraulisches System manuell, insbesondere mit nur einem Finger, z.B. dem Daumen, über das Bedienelement zu betätigen.

Dadurch, dass das Betätigungselement um eine Achse parallel zur Längsachse, insbesondere um die Längsachse des Hydraulikzylinderteils, drehbar angeordnet ist, ergibt sich eine besonders kompakte Bauweise. Die einfache Umwandlung einer Drehbewegung des Betätigungselements in eine Axialbewegung des Hydraulikzylinderteils und/oder des Volumenverdrängungselements, beispielsweise eines Kolbens, eines Bolzens oder einer Membran, erlaubt es, das hydraulische System, insbesondere eine Bremse, mit nur geringen Bedienkräften zu bedienen. Insbesondere ist es möglich, das Betätigungselement lediglich mit einem Finger, insbesondere dem Daumen, zu betätigen. Auch ist es möglich, eine Betätigungsvorrichtung, die für den Einsatz an der linken Lenkerhälfte und Bedienung mit dem Daumen vorgesehen ist, an der rechten Lenkerhälfte zu montieren und dort mit den restlichen Fingern, bevorzugt mit dem Zeigefinger, zu bedienen und umgekehrt. Die Betätigungsvorrichtung ist auch für den Einsatz bei Sonderfahrzeugen, wie Liegerädern, Transporträdern oder dgl. geeignet. Darüber hinaus kann das Betätigungselement parallel zur Längsachse des Hydraulikzylinderteils bewegbar und/oder senkrecht dazu verdrehbar sein. Die Betätigungsvorrichtung kann auch zur hydraulischen Gasbetätigung bei Motorrädern, Quads und Trikes, Kupplungsbetätigung bei Motorrädern, Quads und Trikes und bei weiteren hydraulischen Systemen Verwendung finden.

Die Betätigung von handelsüblichen Bremsanlagen mit Zeige- und Mittelfinger führt zu unangenehmen Spreizungen der Hand. Bei langen Abfahrten ermüdet das Handgelenk. Die Betätigung mit dem Daumen ermöglicht ein Bremsen ohne unangenehme Spreizung der Hand und volle Fahrkontrolle, da trotz Bremsung der Daumen noch fast komplett am Lenker anliegt. Dadurch ergibt sich eine verbesserte Ergonomie. Das Betätigungselement steht nicht wie herkömmliche Bremshebel ab und stellt damit ein geringeres Verletzungsrisiko dar. Außerdem sind Beschädigungen der Betätigungsvorrichtung anders als bei herkömmlichen Bremshebeln bei Stürzen weniger zu befürchten.

Die erfindungsgemäße Betätigungsvorrichtung zeichnet sich durch eine besonders schmutzresistente und robuste Konstruktion aus. Für den Einsatz im Gelände, insbesondere bei einem Mountainbike, ist die schmutzresistente Bauweise von großer Bedeutung. Die Betätigungsvorrichtung kann so aufgebaut werden, dass Wasser, Schmutz oder Fremdkörper nicht eindringen können, sodass eine wartungsfreie und problemlose Funktion gewährleistet ist. Die Betätigungsvorrichtung kann mit unterschiedlichen Übersetzungsverhältnissen ausgebildet werden, sodass bei einer Verwendung mit einer Bremszange eines Vorderrads eine größere Bremskraft erzeugt werden kann als bei Verwendung mit der Bremszange eines Hinterrads.

Die Übersetzungsanordnung kann ein Steilgewindeteil aufweisen, das mit einer ein entsprechendes Gewinde aufweisenden Steilgewindebuchse zusammenwirkt. Durch die Verwendung von Steilgewinden, d. h. einem Steilgewindeteil und einer damit zusammenwirkenden Steilgewindebuchse, können geringe Drehbewegungen in relativ große axiale Bewegungen umgewandelt werden. Zur Betätigung eines hydraulischen Systems müssen daher nur relativ geringe Betätigungswege durch das Bedienelement zurückgelegt werden.

Gemäß einer besonders bevorzugten Ausgestaltung der Erfindung kann vorgesehen sein, dass die Übersetzungsanordnung ein Steilgewindeteil aufweist, das mit einem entsprechenden Gewinde des Hydraulikzylinders oder einer ein entsprechendes Gewinde aufweisenden, am Hydraulikzylinder angeordneten Buchse zusammenwirkt und am Volumenverdrängungselement anliegt. Durch das Steilgewinde wird eine geringe Drehbewegung in eine axiale Bewegung umgewandelt. Wird demnach das Steilgewindeteil in das entsprechende Gegengewinde des Hydraulikzylinders der Buchse eingeschraubt, so bewirkt dies eine Verlagerung des Volumenverdrängungselements, insbesondere eines Kolbens, und somit die Ausübung einer Bremskraft an einer angeschlossenen Bremszange. Das Volumenverdrängungselement, insbesondere der Kolben, ist vorzugsweise drehfest mit dem Steilgewindeteil verbunden. Das Volumenverdrängungselement, insbesondere der Kolben, kann durch entsprechende Überbrückungselemente, z. B. Gleitlager, auch drehbar mit dem Steilgewindeteil verbunden sein.

Der Hydraulikzylinder kann an seiner Innenwand ein mit dem Steilgewinde korrespondierendes Gewinde aufweisen. Alternativ kann ein Adapter, insbesondere eine Buchse, in den Hydraulikzylinder durch Kraftschluss, Form- oder Stoffschluss eingefügt sein, wobei die Buchse ein Innengewinde aufweist, welches mit dem Steilgewinde des Steilgewindeteils der Übersetzungsanordnung korrespondiert. Es können Steilgewindeteile vorgesehen sein, die in unterschiedlichen Abschnitten unterschiedliche Steigungen aufweisen. So kann z. B. durch eine große Steigung zu Beginn der Betätigung und geringere Steigung gegen Ende der Betätigung eine progressive Bremswirkung auch ohne Bremskraftverstärker erreicht werden.

Wird die Betätigungsvorrichtung links am Lenker montiert, weist das Steilgewindeteil vorzugsweise ein Linksgewinde auf und bei Montage rechts am Lenker entsprechend ein Rechtsgewinde.

Das Steilgewindeteil ist vorzugsweise drehfest mit dem Betätigungselement oder einem Grundkörper der Betätigungsvorrichtung gekoppelt oder verbunden. Beispielsweise kann das Betätigungselement einen Mitnehmer aufweisen, der mit einem entsprechenden Anschlag des Steilgewindeteils zusammenwirkt. Wird demnach das Betätigungselement betätigt, also in eine Drehbewegung versetzt, so nimmt dieses das Steilgewindeteil mit, sodass das Steilgewindeteil in das entsprechende Gegengewinde am Hydraulikzylinderteil eingedreht wird und das Volumenverdrängungselement verlagert wird. Wenn sich das Betätigungselement selbst nicht in axialer Richtung bewegen soll, bedeutet dies, dass das Steilgewindeteil sich relativ zum Betätigungselement in axialer Richtung bewegen muss.

Bei weiteren Ausführungsformen kann vorgesehen sein, dass das Betätigungselement mit dem Hydraulikzylinderteil verbunden ist. Insbesondere kann das Hydraulikzylinderteil das Steilgewindeteil aufweisen. In diesem Fall ist die Steilgewindebuchse vorzugsweise ortsfest angeordnet. Bei Betätigung des Betätigungselements wird demnach das Hydraulikzylinderteil und damit das damit verbundene Steilgewindeteil in eine Drehung versetzt. Dies hat zur Folge, dass das Hydraulikzylinderteil in eine axiale Bewegung relativ zu einem ortsfest angeordneten Volumenverdrängungselement verlagert wird. Dabei wird Hydraulikflüssigkeit aus dem Arbeitsvolumen verdrängt.

Alternativ kann vorgesehen sein, dass eine Steilgewindebuchse am Hydraulikzylinderteil, welches das Betätigungselement aufweist, angeordnet ist. In diesem Fall ist vorzugsweise ein ortsfestes Steilgewindeteil vorgesehen. Wird nun das Betätigungselement betätigt, so wird das Hydraulikzylinderteil und damit die Steilgewindebuchse in eine Drehung versetzt und relativ zum ortsfest angeordneten Steilgewindeteil verlagert. Dies führt ebenfalls zu einer axialen Verlagerung des Hydraulikzylinderteils gegenüber einem vorzugsweise ortsfest angeordneten Volumenverdrängungselement.

In diesem Zusammenhang ist es vorteilhaft, wenn das Volumenverdrängungselement zumindest bei Betätigung des Betätigungselements ortsfest angeordnet ist. Grundsätzlich wäre es jedoch auch denkbar, dass sowohl das Volumenverdrängungselement als auch das Hydraulikzylinderteil axial bewegt werden, um Hydraulikflüssigkeit aus dem Arbeitsvolumen zu verdrängen.

Weitere Vorteile ergeben sich, wenn Einstellmittel zur Einstellung des Ansprechverhaltens des hydraulischen Systems, insbesondere der Bremse, vorgesehen sind. Beispielsweise können die Einstellmittel dazu vorgesehen sein, die axiale Relativposition von Betätigungselement und Steilgewindeteil einzustellen. Dadurch kann das Volumenverdrängungselement innerhalb des Hydraulikzylinderteils in seiner Ausgangsposition verstellt werden. Wird das Volumenverdrängungselement demnach in Wirkrichtung in Richtung Bremszange verlagert, so genügt bereits ein geringfügiges Betätigen des Betätigungselements, um eine Bremsung auszulösen. Grundsätzlich können Einstellmittel an einer beliebigen Stelle des hydraulischen Systems vorgesehen sein - beispielsweise auch in einer Hydraulikleitung -, sodass durch eine Volumenänderung das Ansprechverhalten geändert werden kann.

Die Einstellmittel können auch ein Volumenausgleichselement umfassen. Dabei kann auch das Volumenverdrängungselement als Volumenausgleichselement verwendet werden. Zum Einstellen des Volumens, beispielsweise um die Betätigungsvorrichtung nachzustellen, wenn die Beläge einer Bremse abgenutzt werden, kann vorgesehen sein, das Volumenausgleichselement zu verstellen, um dadurch das Ansprechverhalten der Bremse einzustellen. Zu diesem Zweck kann auch vorgesehen sein, dass das Volumenverdrängungselement verstellt wird. Sobald eine Einstellung erfolgt ist, ist das Volumenverdrängungselement, wenn es auch als Volumenausgleichelement dient, jedoch ortsfest angeordnet. Das Volumenausgleichselement kann kontinuierlich oder schrittweise axial verstellbar sein. Es müssen geeignete Maßnahmen getroffen werden, um zu verhindern, dass das Volumenausgleichselement selbsttätig verstellt wird. Dies kann beispielsweise durch Vorsehen von entsprechenden Raststufen oder schwergängigen Dichtungen (Erhöhung der Reibung) bewirkt werden.

Vorteilhafterweise kann ein in unterschiedlichen Positionen festlegbares Einstellrad als Einstellmittel auf der dem Hydraulikzylinder abgewandten Seite des Betätigungselements vorgesehen sein. Dadurch, dass das Einstellrad in unterschiedlichen Positionen festlegbar ist, können vordefinierte Stufen für unterschiedliches Ansprechverhalten eingestellt werden. Beispielsweise können vordefinierte Stufen durch Haltemittel, wie Magnete, Rastnasen, Federkugeln oder dergleichen, festlegbar sein. Die Anordnung des Einstellrads auf der dem Hydraulikzylinderteil abgewandten Seite des Betätigungselements hat den Vorteil, dass es einfach zugänglich ist.

Weiterhin ist es denkbar, einen Ausgleichsbehälter zum Volumenausgleich vorzusehen, der über Ausgleichsbohrungen und/oder ein Ventil, insbesondere ein Zentralventil, mit dem Hydraulikzylinderteil verbunden ist. Die Betätigungsvorrichtung kann jedoch auch so ausgelegt werden, dass ein Ausgleichsbehälter nicht notwendig ist.

Weitere Vorteile ergeben sich, wenn Rückstellmittel zur Rückstellung des Betätigungselements nach dessen Betätigung vorgesehen sind. Als Rückstellmittel können beispielsweise Federelemente, insbesondere Schraubenfedern, Gummibänder etc. eingesetzt werden. Beispielsweise kann sich das Betätigungselement über ein Federelement, z. B. eine Schraubenfeder, eine Elastomerfeder oder dgl., an einem Ende des Hydraulikzylinderteils abstützen. Dadurch wird sichergestellt, dass das Volumenverdrängungselement bei Nichtbetätigung des Betätigungselements in seine Ausgangslage zurückbewegt wird, sodass dann eine erneute Bremsung eingeleitet werden kann.

Besondere Vorteile ergeben sich, wenn ein Kugelkopf an einem Zylinderende im Bereich des Übergangs in eine Hydraulikleitung oder ein gerader oder winkliger, insbesondere 90°-Leitungsabgang, vorgesehen ist. Der Kugelkopf weist dabei eine Durchgangsöffnung auf, die in die Hydraulikleitung mündet. Dadurch, dass ein Kugelkopf vorgesehen ist, kann die Hydraulikleitung in unterschiedlichen Winkeln zum Zylinder positioniert werden, ohne dass es ein Dichtigkeitsproblem gibt bzw. Hydraulikflüssigkeit auslaufen kann. Die Hydraulikleitung kann daher zumindest in Grenzen in ihrer Lage relativ zur Betätigungsvorrichtung verstellt werden, ohne dass es zu einem Abknicken oder zu einer Beschädigung der Hydraulikleitung kommt. Auch andere Leitungsabgänge, z. B. ein 90°-Abgang, aber auch andere Winkel, sind denkbar.

Gemäß einer Ausgestaltung der Erfindung kann eine Befestigungsanordnung zur Befestigung der Betätigungsvorrichtung an einem Lenker vorgesehen sein. Die Befestigungsvorrichtung kann insbesondere so ausgebildet sein, dass die Betätigungsvorrichtung um zumindest eine, vorzugsweise um zumindest zwei Achsen schwenkbar ist, sodass diese auf die Bedürfnisse eines Benutzers zugeschnitten und optimal am Lenker positioniert werden kann. Insbesondere kann die Betätigungsvorrichtung durch entsprechende Ausgestaltung der Befestigungsvorrichtung um ihre Längsachse und senkrecht dazu verdrehbar sein. Ein Benutzer wird somit nicht auf eine vorgegebene Ergonomie festgelegt, sondern kann die Betätigungsvorrichtung nach seinen eigenen Vorstellungen positionieren. Weiterhin kann die Betätigungsvorrichtung entlang ihrer Längsachse verschieblich angeordnet sein.

Die Betätigungsvorrichtung kann auch eine Kugelform aufweisen, die um drei Achsen, insbesondere orthogonal zueinander stehende Achsen, drehbar, jedoch nicht verschiebbar ausgebildet ist. Alternativ könnte durch eine zwischengesetzte Kugelhülse zwischen Klemmvorrichtung und Betätigungsvorrichtung die Betätigungsvorrichtung um drei Achsen drehbar und relativ zu ihrer Längsachse verschiebbar ausgebildet werden.

Die Befestigungsvorrichtung für die Betätigungsvorrichtung kann am Lenker nochmals drehbar und verschiebbar sein.

Die Befestigungsvorrichtung weist vorzugsweise lediglich eine Schraube auf, um diese am Lenker zu arretieren. Dadurch wird die Montage und individuelle Abstimmung erleichtert. Insbesondere kann die Betätigungsvorrichtung so am Lenker positioniert werden, dass das Betätigungselement mit dem Daumen oder einem anderen Finger betätigt werden kann.

Eine kompakte Bauweise ergibt sich, wenn die Betätigungsvorrichtung mit einer Schalteinrichtung, insbesondere zur Änderung des Übersetzungsverhältnisses, vorzugsweise einer Ketten- oder Nabenschaltung, oder sonstigen Schalteinrichtungen wie z.B. zur Sattelabsenkung, Fahrwerkseinstellung, Beleuchtung, Signalhorn oder dgl. kombiniert ist. Die kompakte Bauweise und die individuelle Verstellmöglichkeit der Betätigungsvorrichtung ermöglicht die Kombination mit üblichen Schalthebeln. Dabei kann die Betätigungsvorrichtung in die Schalteinrichtung integriert sein oder mit dieser verbunden sein.

Eine besonders kompakte Anordnung der Betätigungsvorrichtung ergibt sich, wenn der Grundkörper als Hohlzylinder ausgebildet ist, der auf einen Lenker aufschiebbar sein kann. Der Grundkörper kann jedoch auch Bestandteil des Lenkers sein bzw. in diesen integriert sein. Dadurch steht die Betätigungsvorrichtung nicht vom Lenker ab. Die Gefahren einer Beschädigung der Betätigungsvorrichtung und auch der Verletzung eines Benutzers, beispielsweise bei einem Sturz, können dadurch reduziert werden. Die Betätigungsvorrichtung kann mit einem Lenkerstummel eine Einheit bilden und auf die Enden eines (verkürzten) Lenkers, insbesondere Rennlenkers eines Rennrads, aufgesetzt bzw. daran befestigt werden. Insbesondere kann eine solche Einheit mit einem Mittelteil eines Lenkers form-, kraft- oder stoffschlüssig verbunden werden. Auf diese Weise kann eine erfindungsgemäße Betätigungsvorrichtung auch mit einem gebogenen Rennlenker kombiniert werden.

In den Rahmen der Erfindung fällt außerdem eine Bremsanlage mit einer erfindungsgemäßen Betätigungsvorrichtung und einer mit der Betätigungsvorrichtung über eine Hydraulikleitung verbundenen Bremszange, wobei ein Bremskraftverstärker vorgesehen ist. Der Bremskraftverstärker kann sich in der Bremszange, der Hydraulikleitung oder der Betätigungsvorrichtung befinden. Vorzugsweise weist die Bremszange ein Gehäuse mit einem Zylinderraum auf, in dem ein Stufenkolben angeordnet ist. Das Vorsehen eines Stufenkolbens hat den Vorteil, dass dadurch einfach ein Bremskraftverstärker realisiert wird. Der Bremskraftverstärker wird dabei innerhalb des Gehäuses realisiert. Dies spart Gewicht, Kosten und ermöglicht die Kombination von einem schlanken Design bei einer erhöhten Bremskraft. Außerdem entsteht der hohe Druck für die Bremsung erst im Gehäuse, was die Verwendung von preisgünstigen, weniger druckbeständigen Hydraulikleitungen ermöglicht.

Zur Ankopplung der Hydraulikleitung an der Bremszange kann ein Ankoppelelement vorgesehen sein, das in das Gehäuse integriert ist und an dem Gehäuse drehbar angeordnet ist und somit eine drehbare Verbindung zwischen Gehäuse und Hydraulikleitung ermöglicht. Eine Integration des Ankoppelelements in die Bremszange wirkt Beschädigungen durch Stürze des Fahrrads entgegen.

Weitere Vorteile ergeben sich, wenn in das Gehäuse eine so genannte Postmount-Befestigungsanordnung integriert ist. So ist es möglich, die Bremszange direkt an bestehende Fahrradrahmen oder Gabeln zu montieren. Andere Befestigungsanordnungen, z. B. gemäß IS2000, sind ebenfalls denkbar.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Es zeigen:
- Fig. 1: eine Explosionsdarstellung einer ersten Ausführungsform einer erfindungsgemäßen Betätigungsvorrichtung;
- Fig. 2: eine Längsschnittdarstellung der Ausführungsform der Fig. 1;
- Fig. 3: eine Darstellung der Ausführungsform gemäß Fig. 1 in zusammengebautem Zustand;
- Fig. 4: eine Explosionsdarstellung einer zweiten Ausführungsform einer erfindungsgemäßen Betätigungsvorrichtung;
- Fig. 5: eine Längsschnittdarstellung der Ausführungsform der Fig. 4;
- Fig. 6: eine Darstellung der Ausführungsform gemäß Fig. 4 in zusammengebautem Zustand;
- Fig. 7: eine Explosionsdarstellung einer dritten Ausführungsform einer erfindungsgemäßen Betätigungsvorrichtung für eine Bremse;
- Fig. 8: eine Explosionsdarstellung einer vierten Ausführungsform einer erfindungsgemäßen Betätigungsvorrichtung für eine Bremse;
- Fig. 9: eine Längsschnittdarstellung der Ausführungsform der Fig. 8
- Fig. 10: eine Darstellung der Ausführungsform gemäß Fig. 8 in zusammengebautem Zustand;
- Fig. 11: eine Explosionsdarstellung einer Bremszange einer erfindungsgemäßen Bremsanlage;
- Fig. 12: eine Schnittdarstellung der Bremszange der Fig. 11.

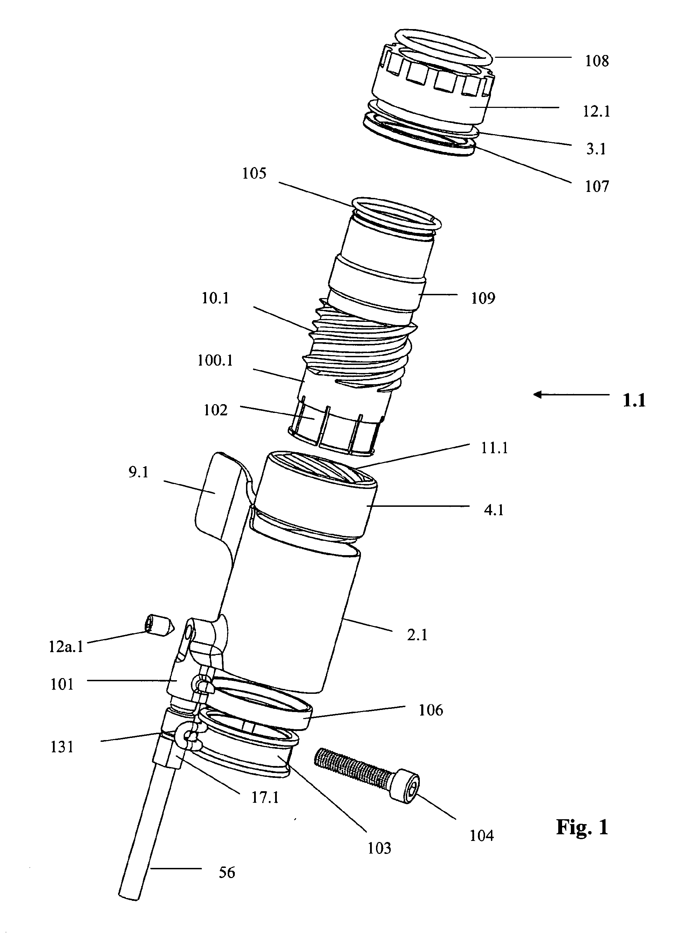

Die Fig. 1 zeigt eine Explosionsdarstellung einer ersten Ausführungsform einer Betätigungsvorrichtung 1.1. Diese umfasst ein Hydraulikzylinderteil 2.1, welches ein Betätigungselement 9.1 aufweist. Über das Betätigungselement 9.1 kann das Hydraulikzylinderteil 2.1 in eine Drehbewegung um seine Längsachse versetzt werden. Die Längsachse des Hydraulikzylinderteils 2.1 stellt auch die Dreh-/Schwenkachse des Betätigungselements 9.1 dar. In dem Hydraulikzylinderteil 2.1 ist eine Steilgewindebuchse 4.1 drehfest angeordnet, insbesondere dort verklebt, verschraubt, form- oder kraftschlüssig gehalten. Die Steilgewindebuchse 4.1 weist ein Innengewinde 11.1 auf, welches als Steilgewinde ausgebildet ist. Dieses Steilgewinde wirkt mit einem Steilgewindeteil 10.1 eines Grundkörpers 100.1 der Betätigungsvorrichtung 1.1 zusammen.

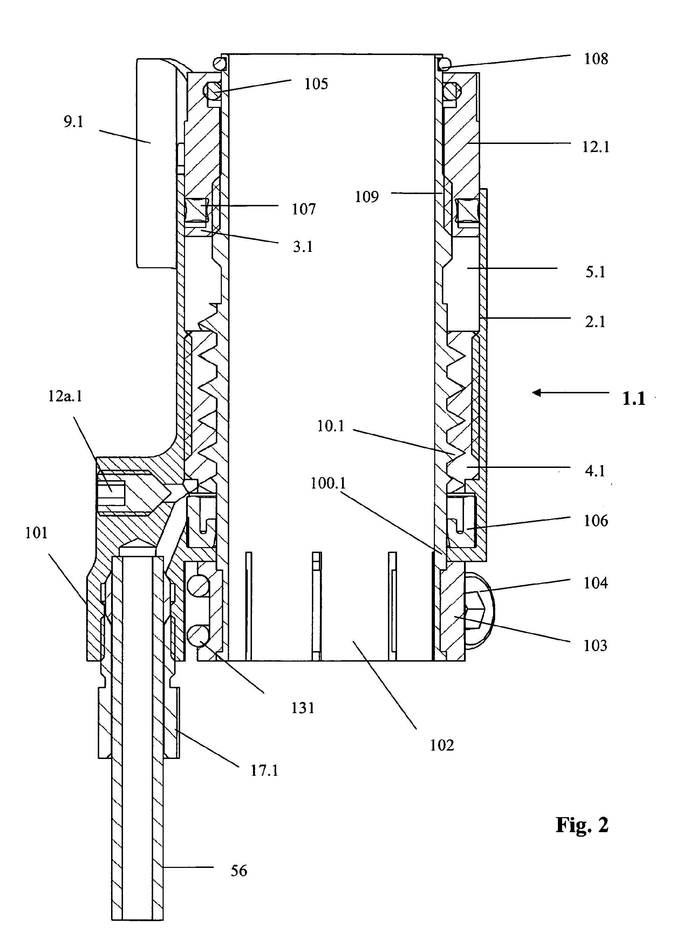

Im hinteren Bereich des Grundkörpers 100.1 ist ein Volumenverdrängungselement 3.1 vorgesehen. In zusammengebautem Zustand ist das Volumenverdrängungselement 3.1 zumindest teilweise in einem Arbeitsvolumen 5.1 (siehe Fig. 2) des Hydraulikzylinderteils 2.1 angeordnet. Bei einer Betätigung der Betätigungsvorrichtung 1.1, d. h. wenn das Hydraulikzylinderteil 2.1 in eine Drehbewegung versetzt wird, wird dieses auch axial relativ zum Volumenverdrängungselement 3.1 verlagert, sodass Hydraulikflüssigkeit aus dem Arbeitsvolumen 5.1 verdrängt wird. Im Betrieb ist das Volumenverdrängungselement 3.1 also ortsfest angeordnet. Die verdrängte Hydraulikflüssigkeit gelangt über eine Nut oder eine Aussparung im Steilgewindeteil 10.1 oder der Steilgewindebuchse 4.1 zu einem Leitungsabgang 101. An diesen ist über ein Anschlussstück 17.1 eine Hydraulikleitung 56 angeschlossen. Die Schraube 12a.1 dient zur Entlüftung des Systems. Der Grundkörper 100.1 ist hohlzylindrisch ausgebildet und kann auf eine Lenkerstange aufgeschoben werden. An einem Ende weist der Grundkörper 100.1 eine geschlitzte Verjüngung 102 auf. An dieser Stelle kann der Grundkörper 100.1 über eine Schelle 103 mittels der Schraube 104 am Lenker fixiert werden. Über die Schelle 103 kann auch eine Schalteinrichtung montiert werden. Durch Lösen der Schelle 103 kann der Grundkörper 100.1 gegenüber der Schelle 103 verdreht und damit in seiner Lage verändert werden. Die Rückstellung des Hydraulikzylinderteils 2.1 nach Bremsbetätigung kann durch ein Rückstellmittel 131 erfolgen, welches in der Ausführungsform der Fig. 1 als Gummiband ausgebildet ist. Das Rückstellmittel 131 ist um den Leitungsabgang 101 gewickelt und stützt sich an der Schelle 103 ab.

Das Volumenverdrängungselement 3.1 dient außerdem als Volumenausgleichselement bzw. Einstellmittel 12.1. Durch axiale Verlagerung des Einstellmittels 12.1, insbesondere durch Aufschrauben auf das Gewinde 109 des Grundkörpers 100.1, kann ein Volumenausgleich erfolgen, z. B. wenn dies aufgrund von Belagsverschleiß der Bremse erforderlich wird. Das Einstellmittel 12.1 und damit das Volumenverdrängungselement 3.1 wird durch ein Dichtelement 105 in der eingestellten Position gehalten. Im Betrieb ist das Volumenausgleichselement also ortsfest angeordnet und kann nur zu Einstellzwecken, wenn kein Bremsbetrieb erfolgt, manuell verstellt werden.

Die Betätigungsvorrichtung 6.1, insbesondere deren bewegliche Teile, werden gegeneinander weiterhin durch die Dichtungen 105, 106 und 107 abgedichtet. Das Anschlagelement 108 dient dem Endanschlag des Einstellmittels 12.1. Das Anschlagelement 108 kann beispielsweise als Sprengring ausgeführt sein.

In der Fig. 2 ist eine Schnittdarstellung durch die zusammengebaute Betätigungsvorrichtung 1.1 gemäß Fig. 1 dargestellt. Es werden die gleichen Bezugsziffern verwendet wie in der Fig. 1. Hier ist ersichtlich, dass bei einer Betätigung der Betätigungsvorrichtung 1.1, also einem Verdrehen des Hydraulikzylinderteils 2.1, auch eine axiale Verlagerung des Hydraulikzylinderteils 2.1 erfolgt, sodass Hydraulikflüssigkeit aus dem Arbeitsvolumen 5.1 verdrängt wird. In diesem Ausführungsbeispiel ist das Arbeitsvolumen ringförmig ausgebildet. Weiterhin ist zu erkennen, dass der Grundkörper 100.1 ein Gewinde 109 aufweist, auf das das Einstellmittel 12.1 aufschraubbar ist. Dadurch lässt sich das Einstellmittel 12.1 axial verstellen und damit die wirksame Größe des Arbeitsvolumens einstellen.

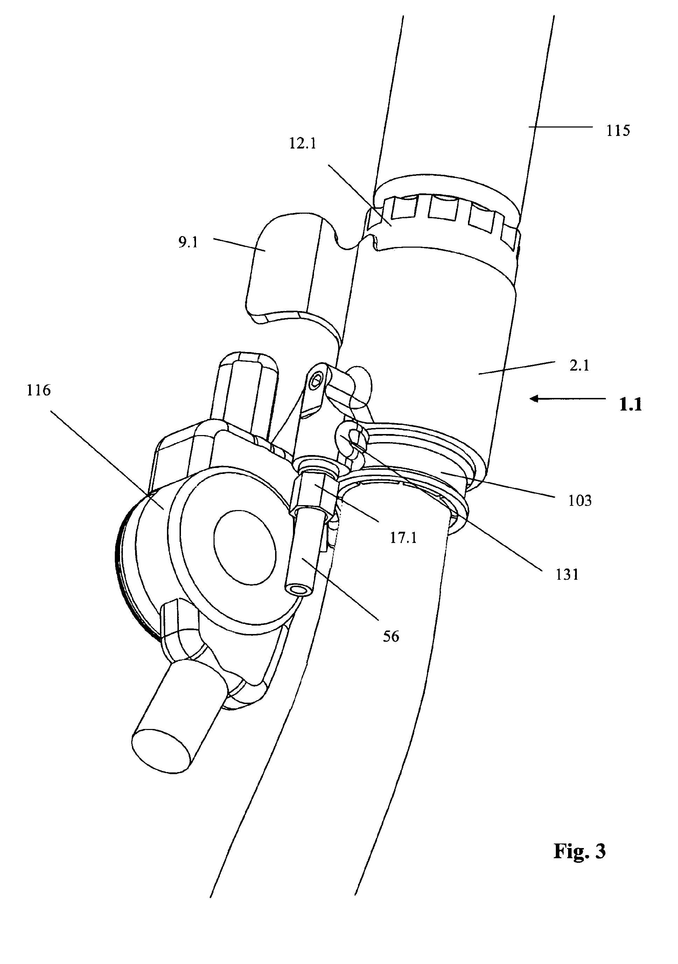

In der Fig. 3 ist die Anordnung der zusammengebauten Betätigungsvorrichtung 1.1 an einer Lenkerstange 115 gezeigt, wobei über die Schelle 103 eine Schalteinrichtung 116 mit der Betätigungsvorrichtung 1.1 kombiniert ist. In diesem Ausführungsbeispiel ist der Grundkörper 100.1 auf die Lenkerstange 115 aufgeschoben. Es ist jedoch auch denkbar, den Grundkörper 100.1 und Lenker 115 zu einem Teil zu vereinigen. In diesem Fall wäre der Grundkörper integraler Bestandteil des Lenkers 115.

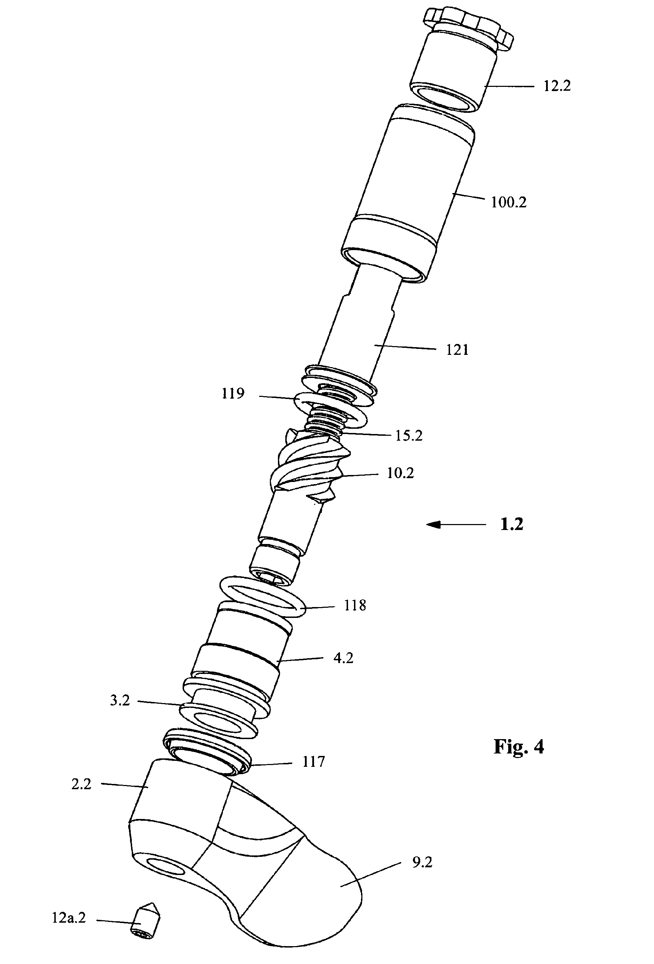

Die Fig. 4 zeigt eine Explosionsdarstellung einer zweiten Ausführungsform einer Betätigungsvorrichtung 1.2. Die Betätigungsvorrichtung 1.2 weist einen Grundkörper 100.2 auf. In dem Grundkörper 100.2 ist drehfest, insbesondere durch Verkleben oder Verschrauben, eine Steilgewindebuchse 4.2 angeordnet. Diese trägt ein Innengewinde, das mit einem Außengewinde eines Steilgewindeteils 10.2 zusammenwirkt. Das Steilgewindeteil 10.2 ist drehfest mit einem Hydraulikzylinderteil 2.2 verbunden, welches ein Arbeitsvolumen 5.2 ausbildet. In dem Arbeitsvolumen 5.2 ist ein Volumenverdrängungselement 3.2 angeordnet. Das Hydraulikzylinderteil 2.2 steht mit einem Bedienelement 9.2 in Verbindung. Wird demnach das Bedienelement 9.2 und damit das Hydraulikzylinderteil 2.2 um die Längsachse des Hydraulikzylinderteils bzw. der Betätigungsvorrichtung 1.2 verdreht, so wird dabei das Steilgewindeteil 10.2 in die Steilgewindebuchse 4.2 eingeschraubt und dadurch das Hydraulikzylinderteil 2.2 axial verlagert. Dadurch wird Hydraulikflüssigkeit aus dem Arbeitsvolumen verdrängt, da das Hydraulikzylinderteil 2.2 axial relativ zum ortsfest angeordneten Volumenverdrängungselement 3.2 verlagert wird.

Die Rückstellung des Hydraulikzylinderteils 2.2 nach einer Betätigung erfolgt durch Rückstellmittel 15.2, die als Schraubenfeder ausgebildet sind.

Ein Einstellmittel 12.2 zur Verstellung eines Volumenausgleichselements 121 ist ebenfalls vorgesehen. Dieses kann in den Grundkörper 100.2 eingeschraubt werden. Durch diese Maßnahme kann das für die Hydraulikflüssigkeit vorgesehene Volumen verändert werden. Dadurch kann eine Nachstellung erfolgen, beispielsweise wenn Bremsbeläge abgenutzt werden.

Über eine Schraube 12a.2 kann die Betätigungsvorrichtung 1.2 entlüftet werden. Zur Abdichtung der beweglichen Teile gegeneinander sind Dichtungen 117, 118, 119 vorgesehen.

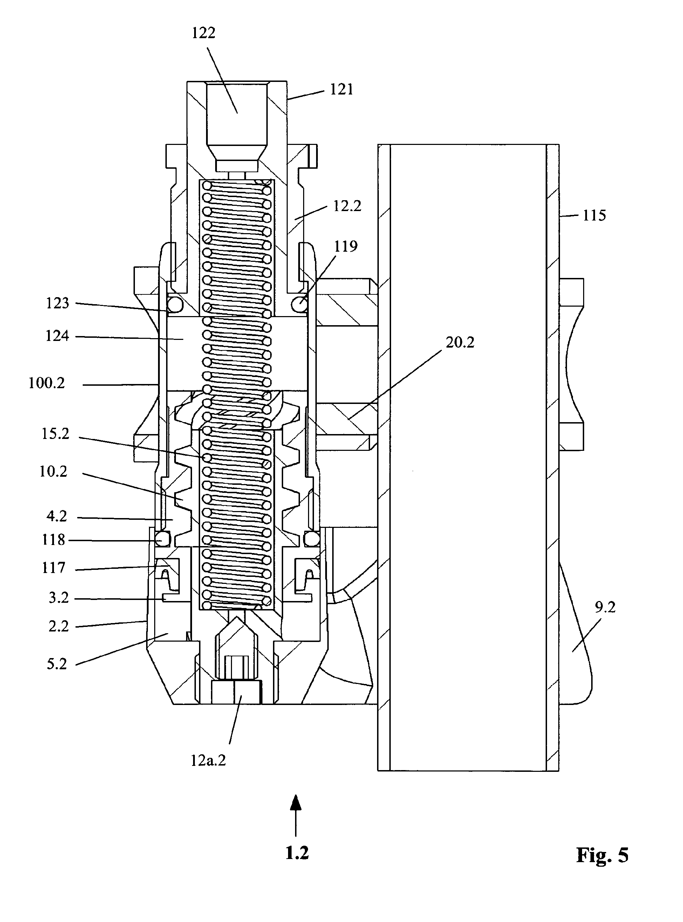

In der Fig. 5 ist eine Schnittdarstellung durch die Ausführungsform gemäß Fig. 4 gezeigt. Hier ist deutlich zu erkennen, dass im Hydraulikzylinderteil 2.2 ein Arbeitsvolumen 5.2 vorhanden ist. Wird nun das Hydraulikzylinderteil 2.2 bei einer Betätigung des Betätigungselements 9.2 zusammen mit dem Steilgewindeteil 10.2 in eine Drehbewegung versetzt, so wird das Steilgewindeteil 10.2 in die Steilgewindebuchse 4.2 eingeschraubt, sodass sich das Hydraulikzylinderteil 2.2 axial relativ zum Volumenverdrängungselement 3.2, welches ortsfest angeordnet ist, bewegt. Dadurch wird Hydraulikflüssigkeit aus dem Arbeitsvolumen 5.2 durch das im Wesentlichen hohlzylindrisch ausgebildete Steilgewindeteil 10.2 bis zu einem Leitungsabgang 122 verdrängt. Die Bewegung des Hydraulikzylinderteils 2.2 erfolgt gegen die Rückstellkraft eines Rückstellmittels 15.2, welches sich zum einen in dem hohlzylindrisch ausgebildeten Steilgewindeteil 10.2 und zum anderen an einem Volumenausgleichselement 121 abstützt.

Das Volumenausgleichselement 121 liegt mit seinem Ringbund 123 an dem Einstellmittel 12.2 an. Das Einstellmittel 12.2 kann in den Grundkörper 100.2 eingeschraubt werden. Dabei wird das Volumenausgleichselement 121 axial verlagert, wodurch das Volumen 124 und damit das gesamte für die Hydraulikflüssigkeit zur Verfügung stehende Volumen verändert wird. Dadurch kann ein Nachstellen erfolgen, wenn beispielsweise Bremsbeläge abgenutzt werden. Die Betätigungsvorrichtung 1.2 ist über eine Befestigungsvorrichtung 20.2, die im Zusammenhang mit den folgenden Figuren noch näher beschrieben wird, an einer Lenkerstange 115 befestigt.

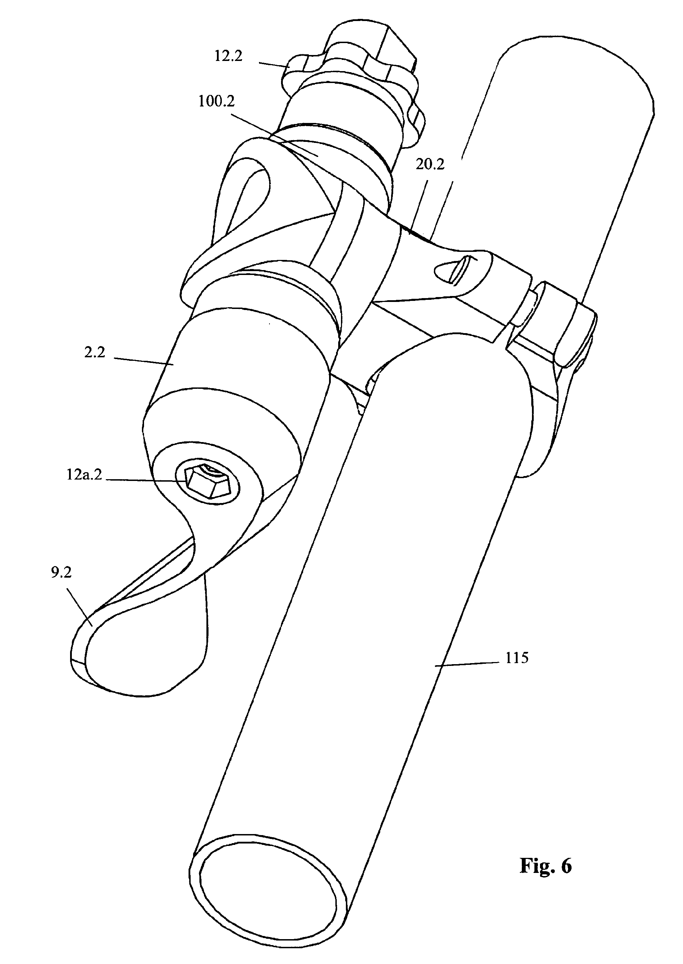

Die Fig. 6 zeigt die zusammengebaute Befestigungsvorrichtung 1.2 an der Lenkerstange 115.

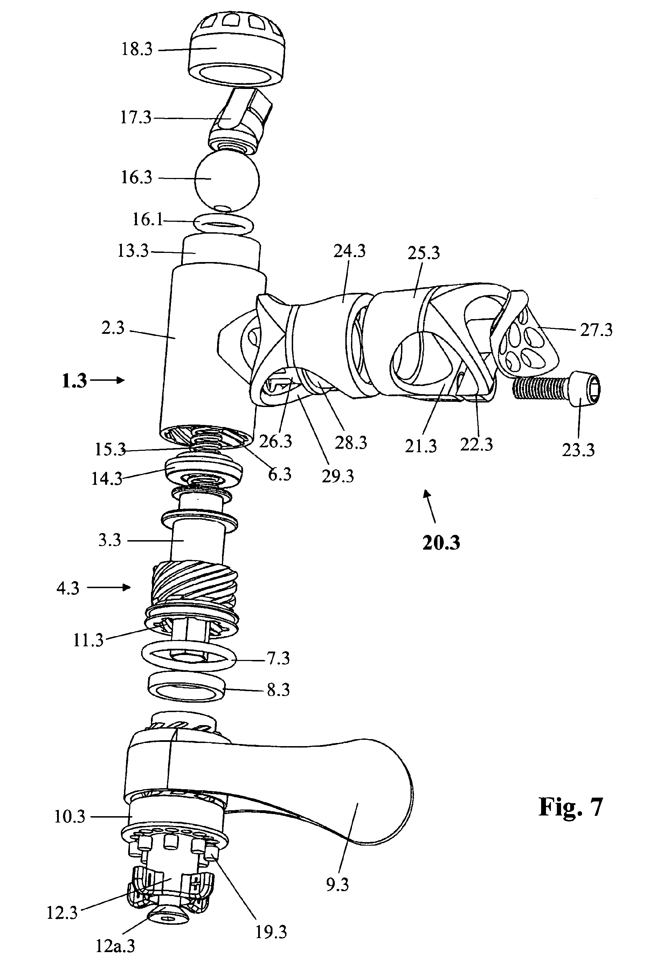

Die Fig. 7 zeigt eine Betätigungsvorrichtung 1.3 für eine Bremszange in einer Explosionsdarstellung. Die Betätigungsvorrichtung 1.3 weist ein Hydraulikzylinderteil 2.3 mit einem Arbeitsvolumen 5.3 auf, in dem ein als Kolben ausgebildetes Volumenverdrängungselement 3.3 bewegbar angeordnet ist. Eine Steilgewindebuchse 4.3, die ein Außengewinde aufweist, ist in das Hydraulikzylinderteil 2.3 einschraubbar. Dazu weist das Hydraulikzylinderteil 2.3 ein Innengewinde 6.3 auf. Die Steilgewindebuchse 4.3 kann eingeklebt werden oder anderweitig drehfest fixiert werden. Mit der Bezugsziffer 7.3 ist ein Dichtring und mit der Ziffer 8.3 ein Sicherungsring, der ein Steilgewindeteil 10.3 im montierten Zustand hält und mit diesem verbunden ist, bezeichnet.

Innerhalb eines Betätigungselements 9.3 ist ein Steilgewindeteil 10.3 angeordnet. Das Steilgewindeteil 10.3 wirkt mit einem Innengewinde 11.3 der Steilgewindebuchse 4.3 zusammen. Dabei ist das Betätigungselement 9.3 drehfest mit dem Steilgewindeteil 10.3 gekoppelt. Ein als Einstellrad ausgebildetes Einstellmittel 12.3 ist auf der dem Hydraulikzylinder 2.3 abgewandten Seite des Betätigungselements 9.3 angeordnet.

Der Fig. 7 ist leicht zu entnehmen, dass das Betätigungselement 9.3 um die Längsachse des Hydraulikzylinders 2.3 drehbar angeordnet ist. Wird das Betätigungselement 9.3 betätigt, so wird das Steilgewindeteil 10.3 in eine Drehung versetzt und aufgrund des Zusammenwirkens des Außengewindes (Steilgewindes) des Steilgewindeteils 10.3 mit dem Innengewinde 11.3 der Steilgewindebuchse 4.3 in axialer Richtung in Richtung Hydraulikzylinderteil 2.3 bewegt. Da das Steilgewindeteil 10.3 am Volumenverdrängungselement 3.3 anliegt, wird das Volumenverdrängungselement 3.3 dadurch in Richtung Ende 13.3 des Hydraulikzylinderteils 2.3 verlagert.

Eine Kolbendichtung 14.3 liegt von innen dichtend am Hydraulikzylinder 2.3 an, sodass eine Hydraulikflüssigkeit durch die gemeinsame Bewegung des Volumenverdrängungselements 3.3 und der Kolbendichtung 14.3 Richtung Ende 13.3 verdrängt wird. Die Bewegung des Volumenverdrängungselements 3.3 erfolgt dabei entgegen der Rückstellkraft eines als Federelement 15.3 ausgebildeten Rückstellmittels, welches sich im Bereich des Endes 13.3 des Hydraulikzylinderteils 2.3 abstützt. Hydraulikflüssigkeit gelangt dann durch einen Kugelkopf 16.3, der eine Durchgangsöffnung aufweist, in ein Anschlussstück 17.3 einer Hydraulikleitung.

Das Anschlussstück 17.3 und damit die Hydraulikleitung sind bezüglich des Kugelkopfes 16.3 drehbeweglich angeordnet. Der Kugelkopf 16.3 wird durch einen Deckel 18.3 unter Zwischenanordnung eines O-Rings 16.1 an dem Hydraulikzylinderteil 2.3 gehalten. Im gezeigten Ausführungsbeispiel stellt das Hydraulikzylinderteil 2.3 einen Grundkörper der Betätigungsvorrichtung 1.3 dar.

Durch das Einstellmittel 12.3 kann das Steilgewindeteil 10.3 in axialer Richtung relativ zum Betätigungselement 9.3 bewegt werden, um dadurch das Volumenverdrängungselement 3.3 in seiner Ausgangsstellung mehr oder weniger weit in das Arbeitsvolumen 5.3 des Hydraulikzylinderteils 2.3 zu schieben. Ist das Volumenverdrängungselement 3.3 weiter in das Hydraulikzylinderteil 2.3 geschoben, so bewirkt eine Bewegung des Betätigungselements 9.3 ein schnelleres Ansprechen der Bremse. Es sind mehrere Raststufen 19.3, die als Magnete ausgebildet sein können, vorgesehen, um unterschiedliche Voreinstellungen des Einstellmittels 12.3 wählen zu können. Die Schraube 12a.3 dient zur Entlüftung des Systems und verhindert den Verlust des Einstellmittels 12.3, das nur durch den Magneten (Raststufen 19.3) gehalten wird. Sie ist direkt in das Volumenverdrängungselement 3.3 geschraubt und nicht mit dem Einstellmittel 12.3 verbunden.

An dem Hydraulikzylinder 2.3 ist eine Befestigungsvorrichtung 20.3, die der Befestigungsvorrichtung 20.2 der Fig. 5 entspricht, vorgesehen. Die Befestigungsvorrichtung 20.3 weist eine Durchgangsöffnung 21.3 für einen Lenker bzw. eine Lenkerstange auf. Durch Lösen und Arretieren der Schelle 22.3 kann die Befestigungsvorrichtung 20.3 und damit die gesamte Betätigungsvorrichtung 1.3 um die Achse der Lenkstange verschwenkt, in axialer Richtung der Lenkstange verstellt und in beliebigen Stellungen arretiert werden. Das Arretieren erfolgt über eine Schraube 23.3. Weiterhin ist es denkbar, die Befestigungsvorrichtung 20.3 mehrteilig auszubilden, sodass auch noch eine Drehverstellung um eine Achse senkrecht zur Lenkerachse möglich ist. Hierzu weist die Befestigungsvorrichtung 20.3 ein hydraulikzylinderseitiges Teil 24.3 und ein lenkerseitiges Teil 25.3 auf. Das hydraulikzylinderseitige Teil 24.3 nimmt in seiner Öffnung 29.3 den als Hydraulikzylinderteil 2.3 ausgebildeten Grundkörper auf. Innerhalb der Öffnung 29.3 ist das Hydraulikzylinderteil 2.3 um seine Längsachse drehbar und in Richtung seiner Längsachse verschieblich verstellbar. Die Teile 24.3, 25.3 können vor einer Arretierung relativ zueinander drehbar sein, so dass das Hydraulikzylinderteil 2.3 um eine Achse senkrecht zu seiner Längsachse drehverstellbar ist.

Hydraulikzylinderteilseitig ist eine erste Klemmkrone 26.3 und lenkerseitig eine weitere Klemmkrone 27.3 vorgesehen. Weiterhin ist eine Schellenverschraubung 28.3 vorhanden. Die Teile 24.3, 25.3 werden über die Schellenverschraubung 28.3 verschraubt, diese Verschraubung wird dauerhaft verklebt. Alternativ zur Schellenverschraubung 28.3 kann ein Verbindungsmittel zur drehbaren Verbindung der Teile 24.3, 25.3 vorgesehen sein.

Die Verschraubung wird zunächst so stark angezogen, dass eine Verdrehung der beiden Teile 24.3, 25.3 noch möglich ist. Wird nun die Lenkerschraube 23.3 angezogen, werden die konisch ausgebildeten Klemmkronen 26.3 und 27.3 verspannt. Eine Verdrehung der Teile 24.3, 25.3 ist dann nicht mehr möglich. In einer vereinfachten Ausführung kann vorgesehen sein, dass die Teile 24.3 und 25.3 nicht zueinander drehbar sind.

Außerdem drückt die Klemmkrone 26.3 auf das Hydraulikzylinderteil 2 und sichert dieses gegen Verschiebung und Verdrehung.

Die Klemmkrone 27.3 auf der einen Seite und die Elemente 21.3, 25.3, 22.3 sind ein Teil und sorgen für die Sicherung der gesamten Betätigungsvorrichtung 1.3 gegen Verdrehung oder Verschiebung gegenüber dem Lenker.

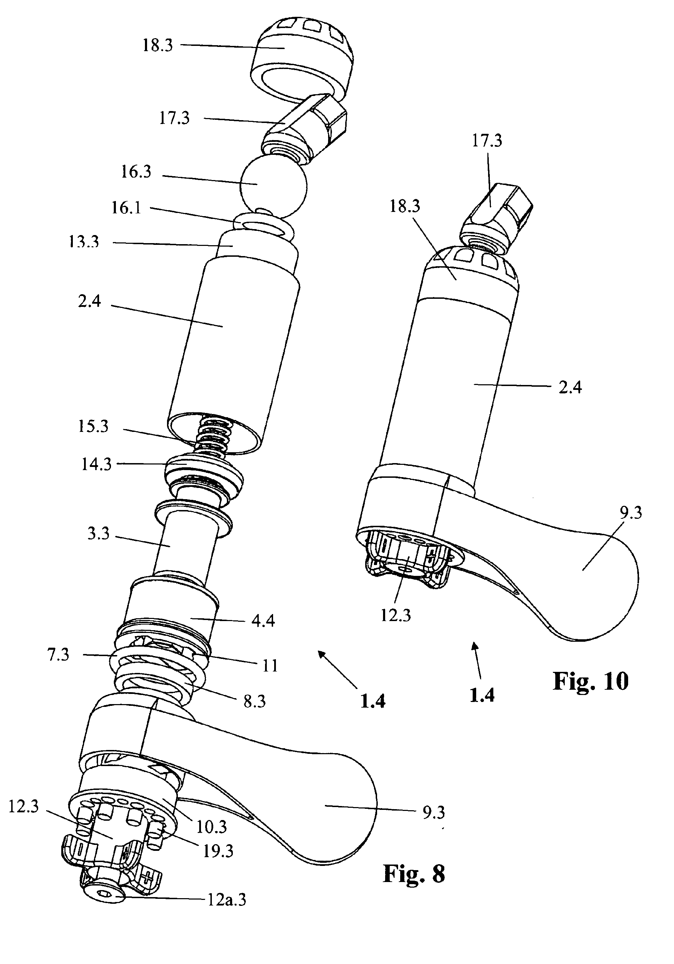

Die Fig. 8 zeigt eine alternative Ausführungsform einer Betätigungsvorrichtung 1.4. Teile, die denen der Ausführungsform der Fig. 7 entsprechen, tragen dieselbe Bezugsziffer und werden nicht näher erläutert. Die Betätigungsvorrichtung 1.4 ist ohne Befestigungsvorrichtung 20.3 gezeigt, kann aber eine solche aufweisen.

Der wesentliche Unterschied zur Ausführungsform gemäß Fig. 7 besteht darin, dass die Steilgewindebuchse 4.4 kein Außengewinde und folglich das Hydraulikzylinderteil 2.4 kein Innengewinde aufweist. Die Steilgewindebuchse 4.4 wird im Hydraulikzylinderteil 2.4 durch Kraft-, Form- oder Stoffschluss gehalten.

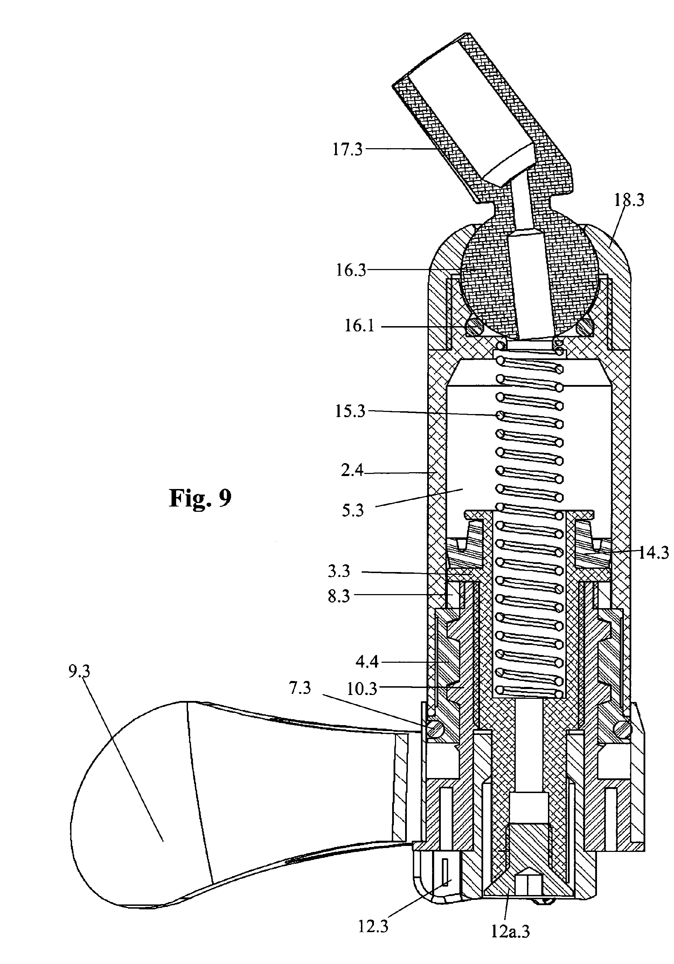

Die Fig. 9 zeigt eine Schnittdarstellung der Betätigungsvorrichtung 1.4 und die Fig. 10 die Betätigungsvorrichtung 1.4 in zusammengebautem Zustand.

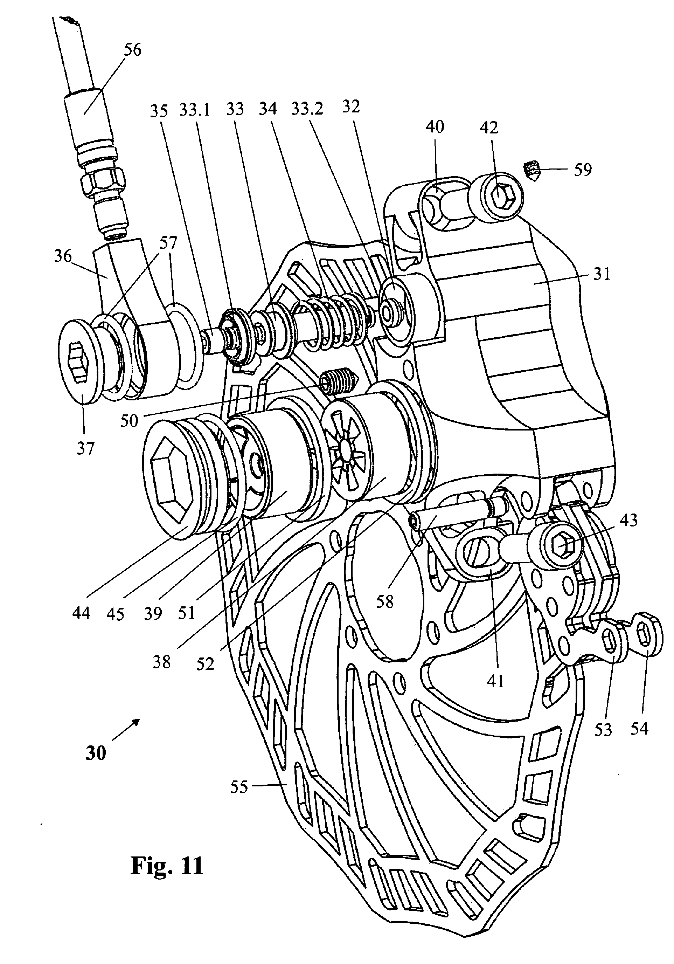

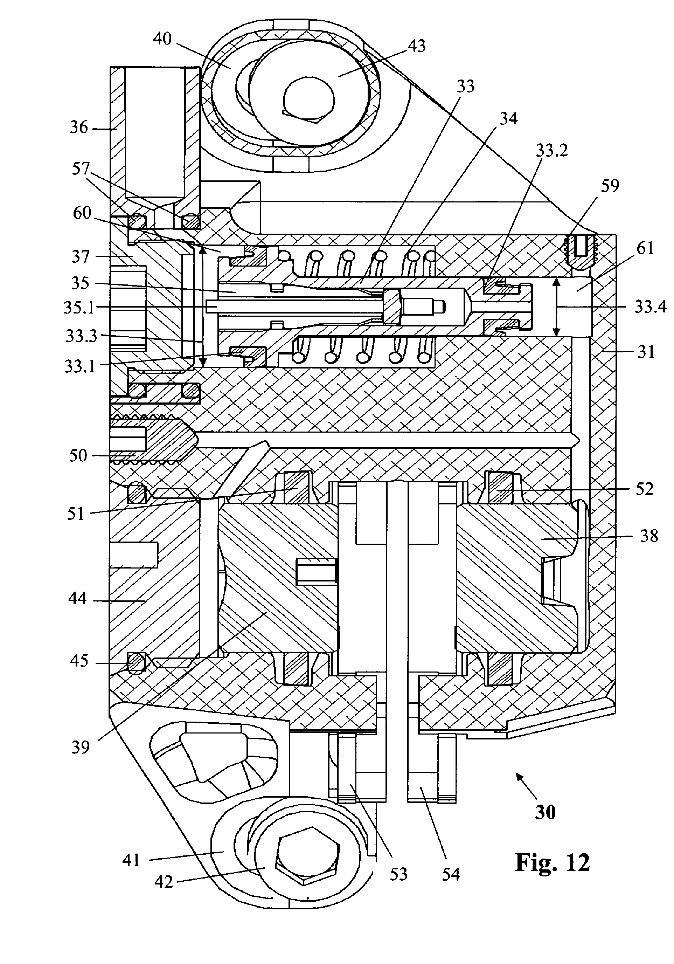

Die Fig. 11 zeigt eine Bremszange 30, die Bestandteil einer Bremsanlage, die auch die Betätigungsvorrichtung 1 aufweist, ist, in einer Explosionsdarstellung und die Fig. 12 in einer Schnittdarstellung. Die Bremszange 30 weist ein Gehäuse 31 mit einem Zylinderraum 32 auf. In dem Zylinderraum 32 ist ein Stufenkolben 33 angeordnet, der sich über ein Federelement 34 an einem Ende des Zylinderraums 32 abstützt. Beidseits des Stufenkolbens 33 sind Kolbendichtringe 33.1, 33.2 vorgesehen. Hydraulikflüssigkeit wird durch ein Anschlussstück 36 zum Anschluss einer Hydraulikleitung 56 zugeführt, welches über eine Anschlussverschraubung 37 am Gehäuse 31 gehalten und in dieses integriert ist, jedoch relativ zum Gehäuse 31 um die Achse des Zylinderraums 32 schwenkbar ist.

Innerhalb des Stufenkolbens 33 ist ein Ventil 35 angeordnet. Bei Einleitung einer Bremsung ist das Ventil 35 zunächst geöffnet und ermöglicht ein freies Durchströmen von Hydraulikflüssigkeit bis zur Anlage der Bremsbeläge 53, 54 an der Bremsscheibe 55. Die Öffnung des Ventils 35 erfolgt durch Anlage des Ventilstößels 35.1 an der Anschlussverschraubung 37.

Die Bremsanlage, umfassend eine Betätigungsvorrichtung 1.1, 1.2, 1.3, 1.4, nicht arbeitenden Stufenkolben 33 und den Kolben 38 39, arbeitet in dieser Phase mit einem geringen Verstärkungsfaktor. Dies bedeutet, dass mit geringem vom Betätigungselement zurückgelegtem Weg eine relativ große Verstellung der Kolben 38, 39 erfolgt.

Sobald die Beläge 53,54 anliegen, baut sich ein hydraulischer Druck auf.

Entsprechend der Flächendifferenz der Kolbenflächen 33.3, 33.4 des Stufenkolbens 33 wird der Stufenkolben 33 gegen das Federelement 34 gedrückt und gegen dessen Rückstellkraft bewegt. Die Bewegung des Stufenkolbens 33 bewirkt ein Verschließen des Ventils 35.

Durch das Kräftegleichgewicht beidseits des Stufenkolbens 33 ergibt sich trotz geringen Betätigungsdruckes im Raum 60 ein hoher Bremssatteldruck im Raum 61 zur Anlage der Kolben 38,39 an die Bremsbeläge 53,54.

Die Bremsanlage arbeitet in dieser Phase mit einem großen Verstärkungsfaktor.

Die Bremszange 30 mit integriertem Stufenkolben 30 kann daher als Bremszange 30 mit integriertem Bremskraftverstärker bezeichnet werden.

Die erfindungsgemäße Bremsanlage mit integriertem Bremskraftverstärker besitzt verschiedene Vorteile gegenüber handelsüblichen Scheibenbremsanlagen, die im folgenden erläutert werden.

Die Abdichtung der Kolben 38, 39 erfolgt durch Kolbendichtringe 51,52 in einer profilierten Gehäusenut. Sie erzeugt nach dem Bremsvorgang ein Zurückziehen der Kolben 38, 39.

Da die erfindungsgemäße Bremsanlage zunächst mit geringem Verstärkungsfaktor arbeitet, können die Kolben 38,39 größere Abstände von der ungebremsten Ausgangsposition bis zur Anlage der Bremsbeläge 53,54 an der Bremsscheibe 55 überbrücken.

Daher ist mit der erfindungsgemäßen Bremsanlage ein größeres Lüftspiel zu realisieren als mit handelsüblichen Scheibenbremsanlagen. Das geringe Lüftspiel an normalen Scheibenbremsanlagen führt zu unangenehmen Geräuschen durch Schleifen der Beläge 53, 54 an der Scheibe 55.

Mit der erfindungsgemäßen Bremsanlage ist es durch den Einsatz der Betätigungsvorrichtung 1.1, 1.2, 1.3, 1.4 und einer Bremszange 30 mit Bremskraftverstärker möglich, trotz kleiner Handkräfte große Bremskräfte zu erzielen.

Die Kolben 38, 39 sind im Gehäuse 31 angeordnet und dort durch einen Deckel 44 gehalten. Zwischen Deckel 44 und Gehäuse 31 ist ein O-Ring 45 vorgesehen.

An dem Gehäuse 31 sind zwei Befestigungsöffnungen 40, 41 vorgesehen, durch die Befestigungsmittel 42, 43 hindurchsteckbar sind. Hierdurch wird eine Postmount-Befestigungsanordnung realisiert. So ist es möglich, die Bremszange direkt an bestehende Fahrradrahmen oder Gabeln zu montieren.

Die Entlüftungsschraube 50 dient der Entlüftung des Systems. Auch andere Positionen und Arten der Entlüftung sind denkbar.

Damit die Bremsbeläge den Kolben 38, 39 folgen, sind die Kunststoffkolben mittig mit einem Magneten versehen.

Alternativ können die Beläge durch Federn oder Ähnliches zurückgedrückt werden. In der Fig. 11 sind weiterhin Dichtringe 57, ein Sicherungsstift 58 und eine Madenschraube 59 zu erkennen.

## Patentansprüche

1. Betätigungsvorrichtung (1.1, 1.2, 1.3, 1.4) für ein hydraulisches System eines Zweirads, Trikes oder Quads, mit einem Betätigungselement (9.1, 9.2, 9.3), einem ein Arbeitsvolumen (5.1, 5.2, 5.3) aufweisenden Hydraulikzylinderteil (2.1, 2.2, 2.3, 2.4) und einem zumindest teilweise im Arbeitsvolumen (5.1, 5.2, 5.3) angeordneten Volumenverdrängungselement (3.1, 3.2, 3.3), wobei das Hydraulikzylinderteil (2.1, 2.2, 2.3, 2.4) und das Volumenverdrängungselement (3.1, 3.2, 3.3) relativ zueinander bewegbar sind, **dadurch gekennzeichnet, dass** das Betätigungselement (9.1, 9.2, 9.3) um eine Achse parallel zur Längsachse des Hydraulikzylinderteils (2.1, 2.2, 2.3, 2.4) drehbar angeordnet ist und eine Übersetzungsanordnung vorgesehen ist, die eine Drehbewegung des Betätigungselements (9.1, 9.2, 9.3) in eine Axialbewegung des Hydraulikzylinderteils (2.1, 2.2, 2.3, 2.4) und/oder des Volumenverdrängungselements (3.1, 3.2, 3.3) wandelt.

2. Betätigungsvorrichtung nach Anspruch 1, **dadurch gekennzeichnet, dass** die Übersetzungsanordnung ein Steilgewindeteil (10.1, 10.2, 10.3) aufweist, das mit einer ein entsprechendes Gewinde aufweisenden Steilgewindebuchse 4.1, 4.2, 4.3, 4.4) zusammenwirkt.

3. Betätigungsvorrichtung nach Anspruch 2, **dadurch gekennzeichnet, dass** das Steilgewindeteil (10.1, 10.2, 10.3) drehfest mit dem Betätigungselement (9.1, 9.2, 9.3) oder einem Grundkörper (100.1, 100.2) der Betätigungsvorrichtung (1.1, 1.2, 1.3, 1.4) gekoppelt ist.

4. Betätigungsvorrichtung nach einem der vorhergehenden Ansprüche, **dadurch gekennzeichnet, dass** das Betätigungselement (9.1, 9.2) mit dem Hydraulikzylinderteil (2.1, 2.2) verbunden ist.

5. Betätigungsvorrichtung nach einem der vorhergehenden Ansprüche, **dadurch gekennzeichnet, dass** das Steilgewindeteil (10.1, 10.2, 10.3) oder die Steilgewindebuchse (4.1, 4.2, 4.3, 4.4) am Hydraulikzylinderteil (2.1, 2.2, 2.3, 2.4) angeordnet ist.

6. Betätigungsvorrichtung nach einem der vorhergehenden Ansprüche, **dadurch gekennzeichnet, dass** das Volumenverdrängungselement (3.1, 3.2) zumindest bei Betätigung des Betätigungselements (9.1, 9.2) ortsfest angeordnet ist.

7. Betätigungsvorrichtung nach einem der vorhergehenden Ansprüche, **dadurch gekennzeichnet, dass** Einstellmittel (12.1, 12.2, 12.3) zur Einstellung des Ansprechverhaltens des hydraulischen Systems vorgesehen sind.

8. Betätigungsvorrichtung nach Anspruch 7, **dadurch gekennzeichnet, dass** die Einstellmittel (12.1, 12.2) ein Volumenausgleichselement (12.1) umfassen.

9. Betätigungsvorrichtung nach einem der vorhergehenden Ansprüche, **dadurch gekennzeichnet, dass** Rückstellmittel (15.2, 15.3) zur Rückstellung des Betätigungselements (9.1, 9.2, 9.3) nach dessen Betätigung vorgesehen sind.

10. Betätigungsvorrichtung nach einem der vorhergehenden Ansprüche, **dadurch gekennzeichnet, dass** ein Kugelkopf (16.3) an einem Zylinderende (13.3) im Bereich des Übergangs in eine Hydraulikleitung oder ein gerader oder winkliger, insbesondere 90°-Leitungsabgang, vorgesehen ist.

11. Betätigungsvorrichtung nach einem der vorhergehenden Ansprüche, **dadurch gekennzeichnet, dass** die Betätigungsvorrichtung (1.1, 1 .2, 1.3, 1.4) mit einer Schalteinrichtung (116), insbesondere zur Änderung des Übersetzungsverhältnisses, vorzugsweise einer Ketten- oder Nabenschaltung, kombiniert ist.

12. Betätigungsvorrichtung nach einem der vorhergehenden Ansprüche, **dadurch gekennzeichnet, dass** der Grundkörper (100.2) als Hohlzylinder ausgebildet ist.

13. Bremsanlage mit einer Betätigungsvorrichtung (1,1a) nach einem der vorhergehenden Ansprüche und einer mit der Betätigungsvorrichtung (1.1, 1.2, 1.3, 1.4) über eine Hydraulikleitung (56) verbundenen Bremszange (30), wobei ein Bremskraftverstärker vorgesehen ist.

14. Bremsanlage nach Anspruch 13, **dadurch gekennzeichnet, dass** die Bremszange die ein Gehäuse (31) mit einem Zylinderraum (32) aufweist, in dem ein Stufenkolben (33) angeordnet ist.

15. Bremsanlage nach Anspruch 13 oder 14, **dadurch gekennzeichnet, dass** zur Ankopplung der Hydraulikleitung (56) an der Bremszange (30) ein Ankoppelelement (36) vorgesehen ist, das in das Gehäuse (31) integriert ist und an dem Gehäuse drehbar angeordnet ist.
